# EUROPÄISCHE PATENTSCHRIFT

(11) **EP 1 686 039 B1**
(45) Veröffentlichungstag und Bekanntmachung des Hinweises auf die Patenterteilung: **05.03.2008**
(21) Anmeldenummer: 06001376.0
(22) Anmeldetag: 24.01.2006
(51) Int. Cl.: B62D 1/10, B62D 1/04, B66F 9/20

(54) **Lenkvorrichtung für ein Flurförderzeug**
Steering device for industrial vehicle
Dispositif de direction pour véhicules industriels

(30) Priorität: 29.01.2005 DE 102005004180
(43) Veröffentlichungstag der Anmeldung: 02.08.2006
(73) Patentinhaber: Dambach Lagersysteme GmbH & Co. KG, 76571 Gaggenau (DE)
(72) Erfinder: Cartus, Werner, 77855 Achern (DE)
(74) Vertreter: Lasch, Hartmut

(56) Entgegenhaltungen:
- DE-A1- 2 317 373
- DE-A1- 19 510 717
- DE-C1- 19 634 102
- PATENT ABSTRACTS OF JAPAN Bd. 2003, Nr. 10, 8. Oktober 2003 (2003-10-08) -& JP 2003 171094 A (TOYOTA INDUSTRIES CORP), 17. Juni 2003 (2003-06-17)
- PATENT ABSTRACTS OF JAPAN Bd. 011, Nr. 102 (M-576), 31. März 1987 (1987-03-31) -& JP 61 249855 A (TOYODA GOSEI CO LTD), 7. November 1986 (1986-11-07)
- PATENT ABSTRACTS OF JAPAN Bd. 009, Nr. 135 (M-386), 11. Juni 1985 (1985-06-11) -& JP 60 015261 A (TOOMEN:KK), 25. Januar 1985 (1985-01-25)

## Beschreibung

Die Erfindung betrifft eine Lenkvorrichtung für ein Flurförderzeug, mit einem Lenkerteil, das mit einem Lagerring verbunden ist, der über ein Drehlager, insbesondere ein Kugellager, drehbar an einem Gehäuseteil gehalten ist.

Flurförderzeuge, beispielsweise Gabelstapler oder Mehrwegestapler, dienen üblicherweise zum Umlagern von relativ großen Lasten oder zum Ein- bzw. Auslagern von Waren beispielsweise in Regallagern. Da das Gewicht eines Flurförderzeugs, das eine schwere Last trägt, groß ist, muss ein Fahrer des Flurförderzeugs relativ große Lenkkräfte aufbringen, wenn das Flurförderzeug mit einer mechanischen Lenkvorrichtung ausgestattet ist. Aus diesem Grunde wird bei einem Flurförderzeug neuer Bauart üblicherweise eine elektrische Lenkvorrichtung verwendet, wie sie beispielsweise in der DE 195 10 717 A1 gezeigt ist.

Die elektrische Lenkvorrichtung gemäß der DE 195 10 717 A1 umfasst ein Lenkrad, das über Speichen mit einer sich im wesentlichen senkrecht dazu erstreckenden, mittigen Lenkwelle verbunden ist, wobei die Lenkwelle in zwei axial bestandeten Kugellagern drehbar gelagert ist. Mittels einer Sensorvorrichtung werden der Drehwinkel der Lenkwelle und somit der Lenkwinkel und die Lenkwinkelgeschwindigkeit erfasst und entsprechende Impulse werden an eine Steuervorrichtung geben, die eine elektrische Verstellvorrichtung, beispielsweise einen Elektromotor ansteuert, der eine entsprechende Verstellung zumindest eines der Räder des Flurförderzeugs bewirkt. Auf diese Weise lässt sich das Flurförderzeug mit relativ geringen Lenkkräften lenken.

Nachteilig bei einer derartigen Lenkvorrichtung ist jedoch, dass sie ein relativ großen Bauraum insbesondere in Längsrichtung der Lenkwelle erfordert, der die Länge der Lenkwelle und die Tiefe des Lenkrads umfasst.

Aus der DE 196 34 102 C1 ist eine Lenkvorrichtung gemäß dem Oberbegriff des Anspruchs 1 bekannt. Dabei ist ein ringförmiges Lenkerteil vorgesehen, das mit einem Lagerring in Form eines axial hervorstehenden Kragens über ein Wälzlager am Umfang eines ringförmigen Trägerteils angeordnet ist. Eine Drehung des Lenkerteils wird erfasst und ein entsprechendes Signal wird an einen Lenkmotor übertragen, der die Lenkbewegung erzeugt. Dabei verläuft eine vom ringförmigen Lenkerteil aufgespannte ebene Fläche parallel zu einer vom Lagerring bzw. vom Wälzlager aufgespannten ebenen Fläche. Eine derartige Lenkvorrichtung besitzt zwar einen kompakten, platzsparenden Aufbau und ist gut für ein Kraftfahrzeug geeignet, bei dessen Betrieb üblicherweise relativ geringe Lenkbewegungen notwendig sind. Bei dem Betrieb eines Flurförderzeuges sind jedoch sehr oft sehr große Lenkbewegungen notwendig, die eine mehrfache Umdrehung des Lenkerteils notwendig machen. Eine Lenkvorrichtung gemäß der DE 196 34 102 C1 hat sich bei Verwendung in einem Flurförderzeug in ergonomischer Hinsicht als unhandlich und unpraktisch erwiesen.

Der Erfindung liegt die Aufgabe zugrunde, eine Lenkvorrichtung der genannten Art zu schaffen, die einen kompakten, platzsparenden Aufbau besitzt und mit der sich auch große Lenkbewegungen in ergonomisch günstiger Weise ausführen lassen.

Diese Aufgabe wird erfindungsgemäß bei einer Lenkvorrichtung für ein Flurförderzeug der genannten Art mit den kennzeichnenden Merkmalen des Anspruchs 1 gelöst.

Die erfindungsgemäße Lenkvorrichtung besitzt ebenfalls ein Lenkerteil, das mit einem Lagerring verbunden ist, der über ein Drehlager beispielsweise in Form eines Wälzkörperlagers, z.B. über ein Kugellager, drehbar an einem Gehäuseteil gehalten ist. Die Verwendung eines flachen Lagerrings statt einer Lenkwelle verringert den notwendigen Bauraum wesentlich, da der Lagerring koaxial zu dem Drehlager angeordnet sein kann.

Gemäß der Erfindung ist vorgesehen, dass das Lenkerteil eine vorzugsweise ebene Fläche aufspannt, die oberhalb des Lagerrings angeordnet ist, wodurch ein besonders platzsparender Aufbau erreicht ist. Dabei ist das Lenkerteil so angeordnet, dass die vom Lenkerteil aufgespannt Fläche unter einem Winkel im Bereich von 20° bis 60° und insbesondere im Bereich von 30° bis 50° relativ zu einer vom Lagerring aufgespannten ebenen Fläche geneigt ist. Dies führt bei Verwendung eines speichenlosen ringförmigen Lenkerteils zu einer Ausgestaltung, bei der das Lenkerteil oberhalb oder unmittelbar radial außerhalb des Lagerrings angeordnet und vorzugsweise an nur einer Stelle bzw. einem Befestigungsbereich seines Umfangs, die in Normalstellung der Lenkvorrichtung dem Fahrer zugewandt ist, mit dem Lagerring verbunden ist, während das Lenkerteil am diametral gegenüberliegenden, dem Fahrer abgewandten Umfangsbereich vom Lagerring abgehoben ist. Eine derartige Ausgestaltung hat sich insbesondere für große Lenkbewegungen als ergonomisch sinnvoll erwiesen.

In Weiterbildung der Erfindung kann vorgesehen sein, dass diametral entgegengesetzt zu dem Befestigungsbereich des Lenkerteils an diesem ein Lenkerknauf angeordnet ist, wodurch die Ausführung großer Lenkbewegung zusätzlich erleichtert wird.

Die Drehbewegung des Lagerrings, d.h. der Lenkwinkel und die Lenkwinkelgeschwindigkeit, werden in herkömmlicher Weise mittels zumindest einer Sensorvorrichtung erfasst, die entsprechende Signale an eine Steuervorrichtung abgibt, die die Elektromotoren zur Verstellung der einzelnen Räder des Flurförderzeugs entsprechend ansteuert, um den vom Fahrer gewünschten Lenkvorgang auszuführen.

Vorzugsweise ist das ringförmige Lenkerteil an seinem Befestigungsabschnitt fest mit dem Lagerring verbunden. Jedoch kann auch eine verstellbare Halterung zwischen diesen Bauteilen vorgesehen sein, die es ermöglicht, die Neigung des Lenkerteils relativ zu dem Lagerring zu verstellen und in verschiedenen Neigungspositionen jeweils zu arretieren. Auf diese Weise kann der Fahrer des Flurförderzeugs die Lenkvorrichtung an seine individuellen Bedürfnisse anpassen.

In bevorzugter Ausgestaltung der Erfindung ist vorgesehen, dass das Drehlager oder Wälzkörperlager an einem radial inneren Lagerteil drehfest mit dem feststehenden Gehäuseteil und an einem radial äußeren drehbaren Lagerteil mit dem Lagerring verbunden ist. Auf diese Weise besitzt der kreisförmige Lagerring einen relativ großen Durchmesser, so dass Lenkbewegungen über einen vorgegebenen Winkel zu einer relativ großen Verstellung des Lagerrings führen, die sich mit hoher Genauigkeit erfassen lässt. Darüber hinaus ist die Bauhöhe der aus dem Wälzkörperlager und dem Lagerring bestehenden Baueinheit auf diese Weise gering gehalten.

In bevorzugter Ausgestaltung der Erfindung ist vorgesehen, dass der Lagerring das Drehlager oder Wälzkörperlager oberseitig zumindest teilweise übergreift und abdeckt, wodurch der Lagerring als Schutzabdeckung für das Drehlager oder Wälzkörperlager dient und dessen Verschmutzung verhindert.

Durch Verwendung eines Lagerrings ist der weitere Vorteil gegeben, dass der Bauraum nahe der Drehachse des Lagerrings nicht für eine Lenkwelle benötigt wird. Der nahe der Drehachse liegende Raum kann auf diese Weise für andere Einbauteile verwendet werden. In bevorzugter Ausgestaltung der Erfindung ist vorgesehen, dass in dem Gehäuseteil innerhalb des Lagerrings eine Informationseinheit, z.B. eine Armaturentafel, vorzugsweise drehfest angeordnet ist, die zumindest eine Anzeigevorrichtung für Betriebszustände des Flurförderzeugs, z.B. ein Tachometer, ein Manometer etc., und/ oder zumindest ein Betätigungselement zur Änderung eines Betriebszustand des Flurförderzeugs, z.B. einen Fahrtrichtungs-Wahlschalter, Betätigungstasten für eine Hubvorrichtung etc., aufweist. Die Anordnung einer entsprechenden Informationseinheit im Inneren des Lagerrings stellt sicher, dass der Fahrer die dortigen Anzeigevorrichtungen immer im Blick hat und die dortigen Betätigungselemente schnell erreichen kann, wobei der drehfeste Einbau der Informationseinheit in das Gehäuseteil sicherstellt, dass die Ausrichtung der Informationseinheit unabhängig von der Drehstellung des Lenkerteils oder des Lagerrings ist. Bei Verwendung eines speichenlosen ringförmigen Lenkerteils ist darüber hinaus der Vorteil gegeben, dass das Lenkerteil die Anzeigevorrichtung der Informationseinheit in keiner Stellung verdeckt.

In bevorzugter Ausgestaltung der Erfindung ist vorgesehen, dass die Oberseite der Informationseinheit bündig zu der Oberseite des Lagerrings angeordnet ist, so dass dem Fahrer eine ebene, stufenlose Oberfläche zugewandt ist.

Als Lenkerteil kann jedes Bauteil verwendet werden, dass es dem Fahrer in ergonomisch sinnvoller Weise ermöglicht, den Lagerring zu drehen, um dadurch eine Lenkbewegung zu initiieren. In konstruktiv einfacher Ausgestaltung kann vorgesehen sein, dass der Lagerring direkt mit einem als Lenkerteil wirksamen Handgriff ausgestaltet wird. Alternativ kann als Lenkerteil auch ein Lenkerhorn, wie es insbesondere aus Flugzeugen bekannt ist, oder ein ringförmiges und insbesondere kreisringförmiges Lenkrad vorgesehen sein. Bei Verwendung eines ringförmigen Lenkrads ist dieses vorzugweise speichenlos ausgebildet und an zumindest an einer Stelle bzw. einem Befestigungsbereich seines Umfangs mit dem Lagerring verbunden.

Weitere Einzelheiten und Merkmale der Erfindung sind aus der folgenden Beschreibung eines Ausführungsbeispiels unter Bezugnahme auf die Zeichnung ersichtlich. Es zeigen:
- Fig. 1: eine perspektivische Ansicht einer erfindungsgemäßen Lenkvorrichtung,
- Fig. 2: einen Vertikalschnitt durch die Lenkvorrichtung gemäß Fig. 1 und
- Fig. 3: den Schnitt III-III in Fig. 2

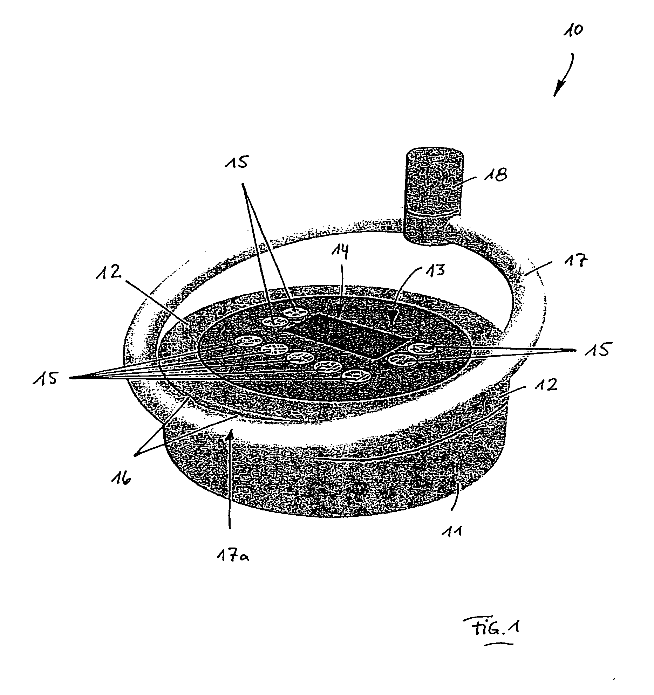

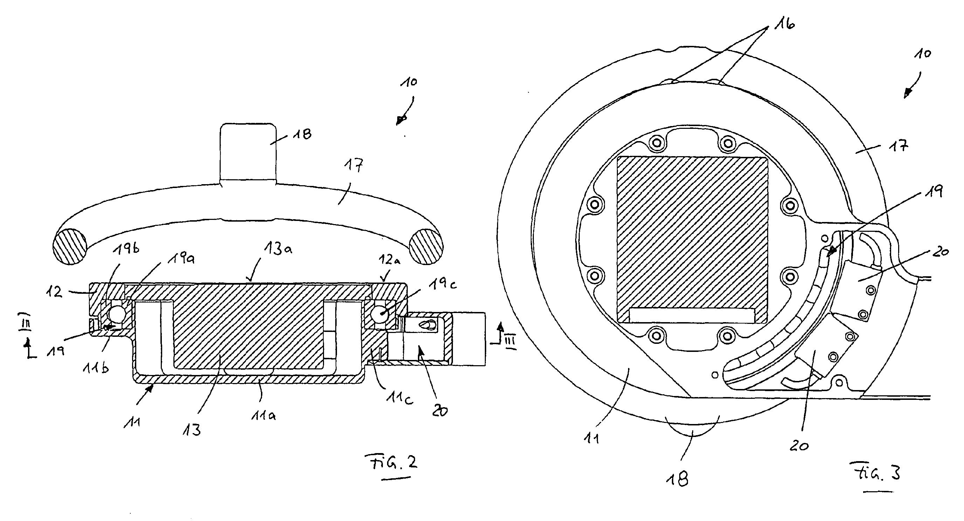

Eine in den Figuren 1 bis 3 dargestellte Lenkvorrichtung 10 für ein Flurförderzeug besitzt ein unteres, wannenartiges Gehäuseteil 11, das in nicht dargestellter Weise mittelbar oder unmittelbar an einer Tragkonstruktion des nicht dargestellten Flurförderzeugs angebracht ist. Wie insbesondere Figur 2 zu entnehmen ist, besitzt das Gehäuseteil 11 einen radial innenliegenden, nach oben öffnenden Wannenabschnitt 11a und radial außenliegende, zumindest teilweise umlaufende Ansätze 11b und 11c. Oberhalb der Ansätze 11b und 11c ist umlaufend um den innenliegenden Wannenabschnitt 11a ein Drehlager 19 in Form eines Wälzkörperlagers, z.B. eines Kugellagers, angeordnet, dessen radial inneres Lagerteil 19a mit dem Gehäuseteil 11 fest verbunden ist. Ein radial außenliegendes Lagerteil 19b des Wälzkörperlagers 19, das mittels über den Umfang verteilter Kugeln 19c relativ zu dem inneren, feststehenden Lagerteil 19a drehbar ist, ist außenseitig mit einem Lagerring 12 verbunden, der auf seiner Oberseite radial zur Mitte des Gehäuseteils 11 abgewinkelt ist und dadurch das Wälzkörperlager 19 oberseitig teilweise übergreift und abdeckt.

Der Lagerring 12 ist außenseitig von einem kreisringförmigen, speichenlosen Lenkerteil 17 umgeben, wobei der Innendurchmesser des Lenkerteils 17 im wesentlichen dem Außendurchmesser des Lagerrings 12 entspricht. Wie insbesondere Fig. 1 zeigt, liegen der Lagerring 12 und das Lenkerteil 17 jedoch nicht in einer Ebene. Während eine vom Lagerring 12 aufgespannte ebene Fläche im wesentlichen horizontal ausgerichtet ist, ist eine vom Lenkerteil 17 aufgespannte ebene Fläche unter einem Winkel von ca. 30° relativ zu der vom Lagerring 12 aufgespannten Fläche geneigt. Dabei ist das Lenkerteil 17 in einem Befestigungsbereich 17a seines Umfangs über zwei Verbindungsstücke 16 mit dem Lagerring 12 verbunden und trägt im diagonal gegenüberliegenden Bereich einen Lenkerknauf 18 üblichen Aufbaus, der ein drehbar gelagertes Griffteil umfasst. In der in Figur 1 dargestellten Normalstellung der Lenkvorrichtung für eine Geradeaus-Fahrt des Flurförderzeugs ist der Befestigungsbereich 17a des Lenkerteils 17, der mit dem Lagerring 12 verbunden ist, dem Fahrer zugewandt, während sich der am diametral gegenüberliegenden, oberen Ende des Lenkerteils angeordnete Lenkerknauf 18 sich mit Abstand oberhalb des Lagerrings 12 befindet.

Aufgrund der radial außerhalb des mittleren Wannenabschnitts 11c angeordneten drehbaren Lagerung des Lenkerteils 17 über das Wälzkörperlager 19 und den Lagerring 12 ist der Innenraum des Wannenabschnitts 11a des Gehäuseteils 11 für die Anordnung von Anzeigevorrichtungen und/oder Betätigungselementen nutzbar. Beim dargestellten Ausführungsbeispiel ist in den Wannenabschnitt 11a des Gehäuseteils 11 eine Informationseinheit 13 eingesetzt. Die Informationseinheit 13 umfasst eine Anzeigevorrichtung 14 in Form eines üblichen Displays, auf dem der Fahrer Daten über bestimmte Betriebszustände des Flurförderzeugs (Geschwindigkeit, Fluiddruck etc.) ablesen kann. Darüber hinaus weist die Informationseinheit 13 mehrere Betätigungselemente 15 in Form von Auswahlschaltern auf, mit denen der Fahrer gewünschte Betriebszustände des Flurförderzeugs ändern oder initiieren kann. Wie die Figuren 1 und 2 zeigen, entspricht der Außendurchmesser der Informationseinheit 13 im wesentlichen dem Innendurchmesser des Lagerrings 12 und eine Oberseite 13a der Informationseinheit 13 ist bündig zu einer Oberseite 12a des Lagerrings 12 angeordnet, so dass insgesamt eine ebene, stufenlose Oberseite erreicht ist.

In einem Umfangsabschnitt des Lagerrings 12 sind radial außerhalb von diesem zwei Sensoren 20 angeordnet, mittels derer die Drehrichtung des Lagerrings 12, der Drehwinkel des Lagerrings 12, der den Lenkwinkel definiert, und die Drehwinkel- bzw. Lenkwinkelgeschwindigkeit des Lagerrings 12 erfasst und in nicht dargestellter Weise an eine Steuervorrichtung übermittelt werden. Die Steuervorrichtung kann dann zur Ausführung der Lenkbewegung jeweils Elektromotoren, die jedem lenkbaren Rad des Flurförderzeugs zugeordnet sind, entsprechend ansteuern.

## Patentansprüche

1. Lenkvorrichtung für ein Flurförderzeug, mit einem Lenkerteil (17), das mit einem Lagerring (12) verbunden ist, der über ein Drehlager (19), insbesondere ein Kugellager, drehbar an einem Gehäuseteil (11) gehalten ist, **dadurch gekennzeichnet, dass** das Lenkerteil (17) so angeordnet ist, dass eine vom Lenkerteil (17) aufgespannte Fläche unter einem Winkel im Bereich von 20° bis 60° relativ zu einer vom Lagerring (12) aufgespannten Fläche geneigt ist.

2. Lenkvorrichtung nach Anspruch 1, **dadurch gekennzeichnet, dass** die vom Lenkerteil (17) aufgespannte Fläche unter einem Winkel im Bereich von 30° bis 50° relativ zu der aufgespannten Fläche geneigt ist.

3. Lenkvorrichtung nach Anspruch 1 oder 2, **dadurch gekennzeichnet, dass** das Lenkerteil (17) nur in einem Befestigungsbereich (17a) seines Umfangs mit dem Lagerring (12) verbunden ist.

4. Lenkvorrichtung nach Anspruch 3, **dadurch gekennzeichnet, dass** diametral entgegengesetzt zu dem Befestigungsbereich (17a) des Lenkerteils (17) an diesem ein Lenkerknauf (18) angeordnet ist.

5. Lenkvorrichtung nach einem der Ansprüche 1 bis 4, **dadurch gekennzeichnet, dass** das Lenkerteil (17) ein speichenloses Lenkrad ist.

6. Lenkvorrichtung nach einem der Ansprüche 1 bis 5, **dadurch gekennzeichnet, dass** das Lenkerteil (17) ringförmig und insbesondere kreisförmig ist.

7. Lenkvorrichtung nach einem der Ansprüche 1 bis 6, **dadurch gekennzeichnet, dass** das Drehlager (19) an einem radial inneren Lagerteil (19a) mit dem feststehenden Gehäuseteil (11) und an einem radial äußeren drehbaren Lagerteil (19b) mit dem Lagerring (12) verbunden ist.

8. Lenkvorrichtung nach einem der Ansprüche 1 bis 7, **dadurch gekennzeichnet, dass** der Lagerring (12) das Drehlager (19) oberseitig zumindest teilweise übergreift und abdeckt.

9. Lenkvorrichtung nach einem der Ansprüche 1 bis 8, **dadurch gekennzeichnet, dass** in dem Gehäuseteil (11) innerhalb des Lagerrings (12) eine Informationseinheit (13) drehfest angeordnet ist, die zumindest einen Anzeigevorrichtung (14) für Betriebszustände des Flurförderzeugs und/oder zumindest ein Betätigungselement (15) zur Änderung eines Betriebszustands des Flurförderzeugs aufweist.

10. Lenkvorrichtung nach Anspruch 9, **dadurch gekennzeichnet, dass** die Oberseite (13a) der Informationseinheit (13) bündig zu der Oberseite (12a) des Lagerrings (12) angeordnet ist.

## Claims

1. A steering device for hall vehicle, with a steering wheel part (17), which is connected to a bearing ring (12) held in a rotatable manner on a housing part (11) via a rotary bearing (19), preferably a ball bearing, **characterized in that** the steering wheel part (17) is arranged so that a surface subtended by the steering wheel part (17) is inclined at an angle in the range from 20° to 60° relative to a surface subtended by the bearing ring (12).

2. The steering device according to claim 1, **characterized in that** the surface subtended by the steering wheel part (17) is inclined relative to the subtended surface at an angle in the range from 30° to 50°.

3. The steering device according to claim 1 or 2, **characterized in that** the steering wheel part (17) is connected to the bearing ring (12) only in a fastening region (17a) of its circumference.

4. The steering device according to claim 3, **characterized in that** a steering knob (18) is arranged on the steering wheel part (17) diametrically opposite to the fastening region (17a).

5. The steering device according to any one of the claims 1 to 4, **characterized in that** the steering wheel part (17) is a spokeless steering wheel.

6. The steering device according to any one of the claims 1 to 5, **characterized in that** the steering wheel part (17) is ringshaped, preferably circular.

7. The steering device according to any one of the claims 1 to 6, **characterized in that** the rotary bearing (19) is connected to the fixed housing part (11) at a radial inner bearing part (19a) and is connected to the bearing ring (12) on a radial outer rotatable bearing part (19b).

8. The steering device according to any one of the claims 1 to 7, **characterized in that** the bearing ring (12) at least partly overlaps a top of the rotary bearing (19).

9. The steering device according to any one of the claims 1 to 8, **characterized in that** an information unit (13) is arranged in a rotationally fixed manner in the housing part (11) within the bearing ring (12), the information unit (13) having at least one display device (14) for operating states of the hall vehicle and/or at least one actuation element (15) for changing an operating state of the hall vehicle.

10. The steering device according to claim 9, **characterized in that** the top (13a) of the information unit (13) is arranged flush with the top (12a) of the bearing ring (12).

## Revendications

1. Dispositif de direction pour chariot de manutention comprenant une partie-guidon (17) reliée à une bague de palier (12) maintenue pivotante sur une pièce de carter (11) par un palier de pivot (19), plus particulièrement un roulement à billes, **caractérisé en ce que** la partie-guidon (17) est disposée de telle façon qu'une surface enserrée par la partie-guidon (17) est inclinée selon un angle compris entre 20° et 60° par rapport à une surface enserrée par la bague de roulement (12).

2. Dispositif de direction selon la revendication 1, **caractérisé en ce que** la surface enserrée par la partie-guidon (17) est inclinée selon un angle compris entre 30° et 50° par rapport à la surface enserrée.

3. Dispositif de direction selon la revendication 1 ou 2, **caractérisé en ce que** la partie-guidon (17) n'est reliée à la bague de roulement (12) que dans une zone de fixation (17a) de son périmètre.

4. Dispositif de direction selon la revendication 3, **caractérisé en ce que** diamétralement opposé à la zone de fixation (17a) de la partie-guidon (17) un pommeau de guidon (18) est disposé sur celle-ci.

5. Dispositif de direction selon l'une quelconque des revendications 1 à 4, **caractérisé en ce que** la partie-guidon (17) est un volant sans rayons.

6. Dispositif de direction selon l'une quelconque des revendications 1 à 5, **caractérisé en ce que** la partie-guidon (17) est de forme annulaire, plus particulièrement circulaire.

7. Dispositif de direction selon l'une quelconque des revendications 1 à 6, **caractérisé en ce que** le palier de pivot (19) est relié à la pièce de carter fixe (11) par une pièce de palier (19a) interne radiale et à la bague de roulement (12) par une pièce de palier (19b) extérieure radiale et pivotante.

8. Dispositif de direction selon l'une quelconque des revendications 1 à 7, **caractérisé en ce que** la bague de palier (12) fait saillie par le haut au moins partiellement au-delà du palier de pivot (19) et le recouvre.

9. Dispositif de direction selon l'une quelconque des revendications 1 à 8, **caractérisé en ce que** dans la pièce de carter (11) à l'intérieur de la bague de roulement (12) est montée à assemblage rigide une unité d'information (13) qui présente au moins un dispositif indicateur (14) des états de fonctionnement du chariot de manutention et/ou au moins un élément d'actionnement (15) pour modifier un état de fonctionnement du chariot de manutention.

10. Dispositif de direction selon la revendication 9, **caractérisé en ce que** la face supérieure (13a) de l'unité d'information (13) est disposée coplanaire à la face supérieure (12a) de la bague de palier (12).
